# FASCICULE DE BREVET EUROPEEN

(11) **EP 1 364 150 B1**
(45) Date de publication et mention de la délivrance du brevet: **13.10.2004**
(21) Numéro de dépôt: 02718230.2
(22) Date de dépôt: 27.02.2002
(51) Int. Cl.: F16L 39/00, B01L 3/00, F15C 5/00

(54) **DISPOSITIF POUR LA CONNEXION DE CAPILLAIRES A UN COMPOSANT DE MICRO-FLUIDIQUE**
VORRICHTUNG ZUR VERBINDUNG VON KAPILLARRÖHREN MIT EINEM MIKROFLUIDISCHEN SYSTEM
DEVICE FOR CONNECTING CAPILLARY COLUMNS TO A MICRO-FLUIDIC COMPONENT

(30) Priorité: 01.03.2001 FR 0102803
(43) Date de publication de la demande: 26.11.2003
(73) Titulaire: Commissariat à l'Energie Atomique, 75752 Paris Cedex 15 (FR)
(72) Inventeur: SARRUT, Nicolas, F-38170 Seyssinet Pariset (FR); FOUILLET, Yves, F-38340 Voreppe (FR); CHARLES, Raymond, F-38430 Saint-Jean-de-Moirans (FR); GRUSS, Jean-Antoine, F-38170 Seyssinet Pariset (FR); ROSTAING, Maurice, F-38150 Ville-sous-Anjou (FR)
(74) Mandataire: Poulin, Gérard
(86) Numéro de dépôt international: PCT/FR2002/000710
(87) Numéro de publication internationale: WO 2002/070942

(56) Documents cités:
- WO-A-00/52376
- WO-A-01/09598
- WO-A-98/49549
- WO-A-99/14368
- US-A- 5 443 890

## Description

### DOMAINE TECHNIQUE

L'invention concerne un dispositif assurant la connexion étanche, réversible et avantageusement collective de capillaires à un composant de micro-fluidique, en particulier à une biopuce. L'invention ressortit notamment au domaine de la recherche médicale, pharmaceutique, biologique, etc.

### ETAT DE LA TECHNIQUE ANTERIEURE

Dans de nombreuses applications de micro-fluidique, il est nécessaire de connecter des micro-composants fluidiques (ensemble de micro-canaux, micro-réservoirs, micro-réacteurs, micro-valves, systèmes de chauffage, etc.) entre eux ou à des systèmes extérieurs (réservoirs, systèmes d'injection, etc.). Une solution fréquemment retenue pour assurer cette connexion consiste en l'utilisation de micro-tubes ou capillaires. Ceux-ci doivent s'insérer à l'intérieur d'un micro-composant pour déboucher sur une structure creuse du type canal, réservoir, réacteur, etc. Les capillaires sont généralement groupés en faisceaux ou en nappes. A l'endroit de la connexion avec le micro-composant, l'étanchéité entre capillaires et vis-à-vis de l'extérieur est assurée par collage ou par insertion en force. On peut se référer à ce sujet à l'article "Novel Interconnection and Channel Technologies for Microfluidics" de N.J. MOURLAS et al., Proc. of the Micro Total Analysis Systems'98, 13-16 octobre 1998, pages 27 à 30.

Le problème qui se pose alors est que l'utilisation de la colle rend la connexion irréversible. Une fois que les capillaires sont collés, ils sont complètement solidarisés du micro-composant et ne peuvent plus être récupérés pour un changement ou un nettoyage par exemple. Dans le cas de l'insertion en force des capillaires, cette solution n'est pas compatible avec une connexion collective de nombreux capillaires et nécessite une pièce intermédiaire dont l'encombrement est rédhibitoire.

Un dispositif pour la connexion étanche similaire au sujet de la revendication 1 est décrit dans le document WO-A-9914368.

### EXPOSÉ DE L'INVENTION

L'invention permet d'apporter une solution à ce problème. Elle consiste à équiper d'un joint mou une pièce rigide à proximité de l'extrémité des capillaires à connecter. La pièce rigide assure le positionnement relatif des capillaires. En la serrant sur le micro-composant, le joint mou est comprimé, ce qui assure l'étanchéité (entre capillaires et vis-à-vis de l'extérieur), et les extrémités des capillaires pénètrent dans le micro-composant.

L'invention procure donc l'avantage d'une réversibilité de la connexion

Le dispositif de connexion selon l'invention s'adapte à la connexion sur des puces en plastique, en silicium, en verre ou en d'autres matériaux. La connexion est possible dans leur plan ou perpendiculairement à leur plan pour des micro-composants plans et sur n'importe laquelle de leurs faces pour des micro-composants volumiques.

L'invention a donc pour objet un dispositif pour la connexion étanche et réversible d'au moins un capillaire à un composant de micro-fluidique, caractérisé en ce qu'il comprend une pièce rigide comprenant des moyens de positionnement du capillaire pour sa connexion au composant micro-fluidique, des moyens de fixation et de positionnement de la pièce rigide par rapport au composant micro-fluidique, un joint mou interposé entre la pièce rigide et le composant micro-fluidique et au travers duquel passe le capillaire, le joint mou et la pièce rigide assurant l'étanchéité de la connexion lorsque la pièce rigide est pressée par les moyens de fixation sur le composant micro-fluidique, le joint mou étant un élément moulé sur la pièce rigide et autour du capillaire.

Cette technique de réalisation permet, pour les dimensions considérées, d'obtenir une étanchéité parfaite en réalisant une adhérence physique entre le joint mou et les capillaires et par conséquent une véritable barrière pour le liquide présent à ce niveau du composant.

Avantageusement, les moyens de positionnement du capillaire sont constitués par un trou traversant la pièce rigide. Le capillaire peut être maintenu à la pièce rigide par de la colle. Dans le cas d'un trou traversant la pièce rigide, la colle est avantageusement disposée entre le trou traversant de la pièce rigide et le capillaire afin d'assurer son maintien sur la pièce rigide. La pièce rigide peut aussi posséder une face présentant une rigole permettant l'introduction de la colle.

Les moyens de fixation et de positionnement de la pièce rigide par rapport au composant micro-fluidique peuvent être des moyens de vissage. Ces moyens de vissage peuvent comprendre des vis s'engageant dans le composant micro-fluidique, le vissage s'effectuant soit sur des écrous, soit sur un filetage dans le composant micro-fluidique. Si le composant est maintenu par un support, les moyens de vissage peuvent comprendre des vis s'engageant dans le support, le vissage s'effectuant soit sur des écrous, soit sur un filetage dans le support.

La pièce rigide peut être en plastique ou en métal.

### BRÈVE DESCRIPTION DES DESSINS

L'invention sera mieux comprise et d'autres avantages et particularités apparaîtront à la lecture de la description qui va suivre, donnée à titre d'exemple non limitatif, accompagnée des dessins annexés parmi lesquels :
- la figure 1 est une vue éclatée associant un composant de micro-fluidique représenté partiellement et un dispositif pour la connexion étanche de capillaires selon l'invention,
- la figure 2 est une vue partielle et en perspective d'un composant de micro-fluidique maintenu dans un support et apte à être connecté perpendiculairement à son plan par le dispositif de connexion selon l'invention,
- la figure 3 est une vue partielle et en perspective d'un composant de micro-fluidique maintenu dans un support et apte à être connecté selon sa tranche par le dispositif de connexion selon l'invention.

### DESCRIPTION DETAILLEE DE MODES DE RÉALISATION DE L'INVENTION

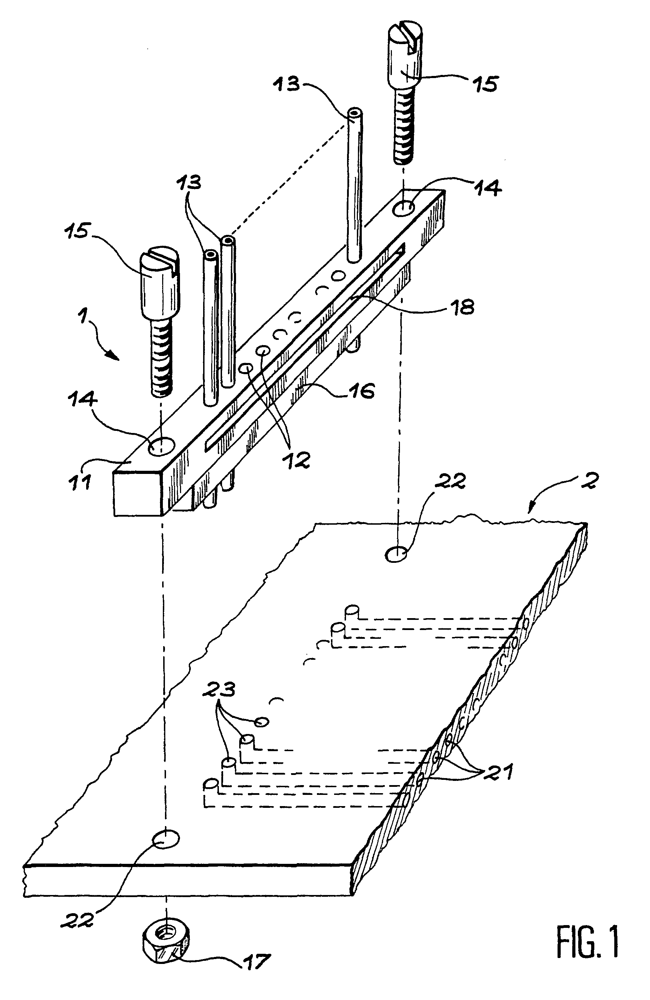

Sur la figure 1, la référence 1 représente le dispositif de connexion étanche selon l'invention et la référence 2 représente un composant de micro-fluidique à connecter perpendiculairement à son plan.

Le dispositif de connexion étanche 1 comprend une pièce rigide 11 qui peut être en plastique (par exemple en polycarbonate) ou en métal (par exemple en laiton). Elle peut être obtenue par usinage ou par moulage. Elle comporte des trous traversants 12 destinés au passage de capillaires 13 en vue de leur alignement et de leur maintien. Les trous traversants 12 sont avantageusement évasés, du côté de l'introduction des capillaires, afin de permettre un positionnement plus aisé de ces capillaires, notamment pour une fabrication industrielle et automatisée des dispositifs de connexion. Elle comporte aussi des trous traversants 14 destinés au passage des tiges de vis 15.

Les capillaires 13 sont par exemple des micro-tubes de silice fondue gainés de polyimide. Leur diamètre intérieur est compris entre 2 et 500 µm et leur diamètre extérieur est compris entre 50 et 700 µm.

Le pas des trous 12, déterminant le pas entre les capillaires, est égal au pas entre les canaux 21 du composant 2. Il peut être, selon les capillaires utilisés, compris entre la dizaine de µm et la centaine de µm.

Les capillaires 13 sont engagés dans les trous 12 jusqu'à la longueur appropriée au composant à connecter. Ils sont solidarisés à la pièce rigide 11 par de la colle. Le type de colle utilisé dépend du matériau de la pièce rigide. De nombreuses colles du commerce peuvent être utilisées.

Selon une variante de réalisation, la pièce rigide 11 possède une rigole 18 sur l'une de ses faces principales et parallèles au plan des capillaires. Cette rigole 18 donne un accès perpendiculaire à une portion des capillaires. La colle est versée dans cette rigole et les capillaires sont donc solidarisés à la pièce rigide au niveau du fond de cette rigole.

La face de la pièce rigide 11 qui est, lors de la connexion, tournée vers le composant 2 est pourvue d'un joint mou 16. Le joint mou 16 est obtenu en fixant un moule parallélépipédique sur la face correspondante de la pièce rigide 11, les capillaires 13 étant déjà solidarisés à la pièce rigide, et en coulant le joint sous forme liquide. A titre d'exemple, le matériau constituant le joint peut être du silicone RTV-2 fabriqué par Rhône-Poulenc. Le joint mou enserre les capillaires 13 et s'arrête avant les trous 14 de passage des vis 15.

Au moment où le matériau constituant le joint est déposé sous forme liquide, ce matériau vient en contact de manière parfaite avec les capillaires du fait des propriétés des liquides. Lorsque le matériau durcit (par polymérisation dans l'exemple du silicone), il conserve cette propriété favorable et le contact entre le joint mou et les capillaires reste parfait. Par ailleurs, grâce toujours aux propriétés des liquides, lorsque le matériau constituant le joint est déposé sous forme liquide, il remonte légèrement le long des capillaires pour former un bourrelet au pied de la zone sortante du capillaire. Une fois comprimé, ce bourrelet (qui est une excroissance de matière) exerce une pression importante sur les parois des trous d'accès au composant micro-fluidique et sur les capillaires. On obtient ainsi une étanchéité complète et parfaite : étanchéité vis-à-vis de l'extérieur (pas de fuite le long du capillaire) et étanchéité d'une structure creuse à une autre (pas de fuite le long du joint mou).

Les vis 15 possèdent par exemple une tête moletée. Leur tige est suffisamment longue pour traverser la pièce rigide 11 pourvue du joint mou 16 et l'épaisseur du composant 2. A la connexion les tiges des vis 15 passent par les trous 22 pour recevoir des écrous 17 de l'autre côté du composant 2. Au serrage les têtes des vis viennent presser la pièce rigide contre le composant avec interposition du joint mou qui est alors comprimé pour assurer l'étanchéité. L'étanchéité des dispositifs ainsi réalisés reste totale lors d'essais de pression réalisés à 3 bar.

A la connexion, les extrémités des capillaires 13 peuvent être engagées dans les orifices 23 donnant accès à l'intérieur du micro-composant, par exemple aux parties coudées des canaux 21 ou à d'autres structures creuses.

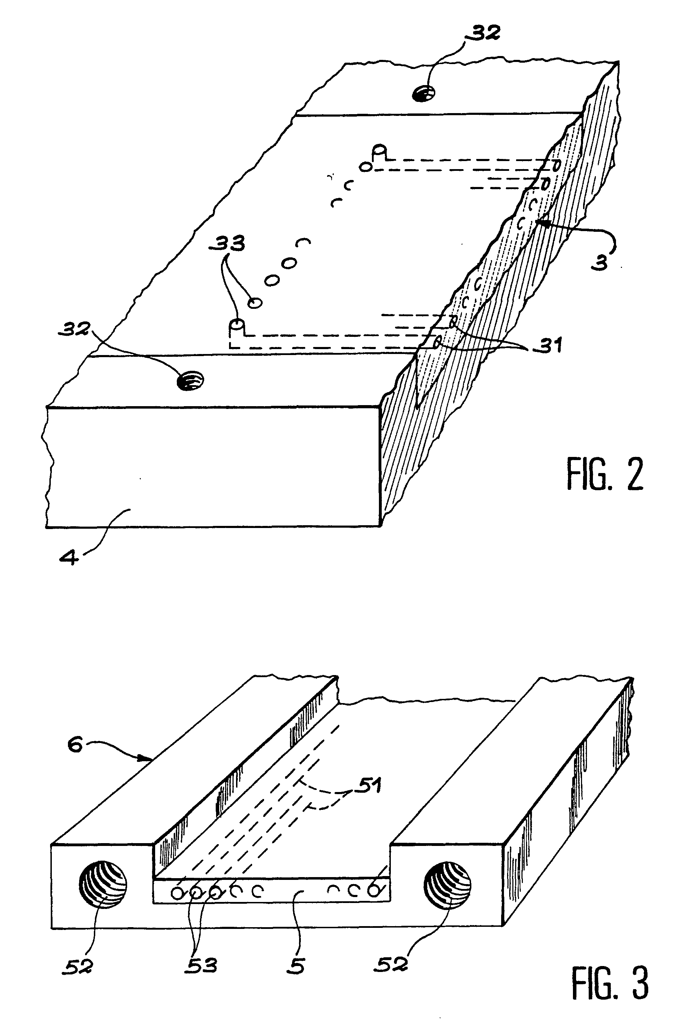

La figure 2 est une vue partielle et en perspective d'un composant de micro-fluidique 3 maintenu dans un support 4. Le support 4 peut être en plastique ou en métal. Il reçoit le composant 3 par collage ou par encastrement. Comme précédemment, la connexion se fait perpendiculairement au plan du composant 3, les extrémités des capillaires s'engageant dans les orifices 33 donnant accès par exemple à des parties coudées des canaux 31.

Dans ce mode de réalisation, la fixation du dispositif de connexion se fait sur le support 4 qui possède des trous 32 de réception des vis de fixation. Les trous 32 peuvent être des trous de passage des tiges filetées des vis, auquel cas le serrage du dispositif de connexion se fait par des écrous prenant appui sur la face arrière du support. Les trous 32 peuvent, selon une variante de réalisation, être filetés ce qui évite l'utilisation d'écrous en face arrière du support. Ce mode de réalisation procure un gain de place sur le composant puisque les trous de fixation sont réalisés sur le support.

La figure 3 est une vue partielle et en perspective d'un autre composant de micro-fluidique 5 maintenu dans un support 6. Comme précédemment, le support peut être en plastique ou en métal et le composant peut être maintenu dans le support par collage ou encastrement. A la différence du mode de réalisation précédent les orifices 53 des canaux 51 sont situés sur une tranche du composant. Dans ce cas, la connexion se fait selon le plan du composant.

Le support 6 possède des trous 52 de réception des vis de fixation. Les trous 52 peuvent être des trous de passage des tiges filetées des vis, auquel cas le serrage du dispositif de connexion se fait par des écrous prenant appui sur la tranche opposée du support 6. Les trous 52 peuvent, selon une variante de réalisation, être filetés ce qui évite l'utilisation d'écrous. Ce mode de réalisation procure aussi un gain de place sur le composant puisque les trous de fixation sont réalisés sur le support.

Le dispositif de connexion selon l'invention peut être utilisé pour tout composant de micro-fluidique. Les principales applications utilisant ce genre de composants sont chimiques, biologiques, pharmaceutiques, médicales (dosage de micro-volumes, réactions chimiques sur des micro-volumes, génotypage, diagnostic : puces à ADN).

## Revendications

1. Dispositif (1) pour la connexion étanche et réversible d'au moins un capillaire (13) à un composant de micro-fluidique (2), **caractérisé en ce qu'**il comprend une pièce rigide (11) comprenant des moyens de positionnement du capillaire (13) pour sa connexion au composant micro-fluidique (2), des moyens de fixation et de positionnement de la pièce rigide par rapport au composant micro-fluidique, un joint mou (16) interposé entre la pièce rigide (11) et le composant micro-fluidique (2) et au travers duquel passe le capillaire (13), le joint mou (16) et la pièce rigide (11) assurant l'étanchéité de la connexion lorsque la pièce rigide (11) est pressée par les moyens de fixation sur le composant micro-fluidique (2), le joint mou étant un élément moulé sur la pièce rigide (11) et autour du capillaire (13).

2. Dispositif selon la revendication 1, **caractérisé en ce que** les moyens de positionnement du capillaire (13) sont constitués par un trou traversant la pièce rigide (12).

3. Dispositif selon l'une des revendications 1 ou 2, **caractérisé en ce que** le capillaire (13) est maintenu à la pièce rigide (11) par de la colle.

4. Dispositif selon les revendications 2 et 3 prises ensemble, **caractérisé en ce que** la colle est disposée entre le trou traversant (12) de la pièce rigide (11) et le. capillaire (13) afin d'assurer son maintien sur la pièce rigide.

5. Dispositif selon les revendications 2 et 3 prises ensemble, **caractérisé en ce que** la pièce rigide (11) possède une face présentant une rigole (18) permettant l'introduction de ladite colle.

6. Dispositif selon l'une quelconque des revendications 1 à 5, **caractérisé en ce que** les moyens de fixation et de positionnement de la pièce rigide par rapport au composant micro-fluidique sont des moyens de vissage (15, 17).

7. Dispositif selon la revendication 6, **caractérisé en ce que** les moyens de vissage comprennent des vis (15) s'engageant dans le composant micro-fluidique (2), le vissage s'effectuant soit sur des écrous (17), soit sur un filetage dans le composant micro-fluidique.

8. Dispositif selon la revendication 6, **caractérisé en ce que**, le composant (3, 5) étant maintenu par un support (4, 6), les moyens de vissage comprennent des vis s'engageant dans le support, le vissage s'effectuant soit sur des écrous, soit sur un filetage dans le support.

9. Dispositif selon l'une quelconque des revendications précédentes, **caractérisé en ce que** la pièce rigide (11) est en plastique ou en métal.

## Patentansprüche

1. Vorrichtung (1) zur dichten und reversiblen Verbindung von wenigstens einem Kapillarröhrchen (13) mit einem Mikrofluidik-Bauteil (2),
**dadurch gekennzeichnet, dass** sie ein steifes Teil (11) umfasst, mit Einrichtungen zur Positionierung des Kapillarröhrchens (13) für seine Verbindung mit dem Mikrofluidik-Bauteil (2), Befestigungs- und Positionierungseinrichtungen des steifen Teils in Bezug auf das Mikrofluidik-Bauteil, ein weiches Verbindungselement (16), eingefügt zwischen dem steifen Teil (11) und dem Mikrofluidik-Bauteil (2) und durchquert von dem Kapillarröhrchen (13), wobei das weiche Verbindungselement (16) und das steife Teil (11) die Dichtheit der Verbindung gewährleisten, wenn das steife Teil (11) durch die Befestigungseinrichtungen auf das Mikrofluidik-Bauteil (2) gepresst wird, wobei das weiche Verbindungselement ein auf dem steifen Teil (11) und um das Kapillarröhrchen herum gegossenes Element ist.

2. Vorrichtung nach Anspruch 1, **dadurch gekennzeichnet, dass** die Positionierungseinrichtungen des Kapillan-öhrchens (13) durch ein das steife Teil (12) durchquerendes Loch gebildet werden.

3. Vorrichtung nach einem der Ansprüche 1 oder 2, **dadurch gekennzeichnet, dass** das Kapillarröhrchen (13) durch Klebstoff in dem steifen Teil (11) festgehalten wird.

4. Vorrichtung nach den Ansprüchen 2 und 3, **dadurch gekennzeichnet, dass** der Klebstoff sich zwischen dem das steife Teil (11) durchquerenden Loch (12) und dem Kapillarröhrchen (13) befindet, um dessen Halt in dem steifen Teil zu gewährleisten.

5. Vorrichtung nach den Ansprüchen 2 und 3, **dadurch gekennzeichnet, dass** das steife Teil (11) auf einer Seite eine Rinne (18) aufweist, durch die der genannte Klebstoff eingeführt werden kann.

6. Vorrichtung nach einem der Ansprüche 1 bis 5, **dadurch gekennzeichnet, dass** die Befestigungs- und Positionierungseinrichtungen des steifen Teils in Bezug auf das Mikrofluidik-Bauteil Schraubverbindungseinrichtungen (15, 17) sind.

7. Vorrichtung nach Anspruch 6, **dadurch gekennzeichnet, dass** die Schraubverbindungseinrichtungen Schrauben (15) umfassen, die entweder das Mikrofluidik-Bauteil (2) durchqueren und mit Schraubmuttem (17) verschraubt sind, oder in Gewinde geschraubt sind, die in dem Mikrofluidik-Bauteil enthalten sind.

8. Vorrichtung nach Anspruch 6, **dadurch gekennzeichnet, dass** das Bauteil (3, 5) durch einen Träger (4, 6) gehalten wird, wobei die Schraubverbindungseinrichtungen Schrauben umfassen, die entweder den Träger durchqueren und mit Muttern verschraubt sind oder in im Träger enthaltene Gewinde geschraubt sind.

9. Vorrichtung nach einem der vorangehenden Ansprüche, **dadurch gekennzeichnet, dass** das steife Teil (11) aus Kunststoff oder aus Metall ist.

## Claims

1. Device (1) for the tight and reversible connection of at least one capillary (13) to a micro-fluidic component (2), **characterised in that** it comprises a rigid part (11) comprising means of positioning the capillary (13) so that it can be connected to the micro-fluidic component (2), means for attaching and positioning the rigid part with respect to the micro-fluidic component, a flexible seal (16) placed between the rigid part (11) and the micro-fluidic component (2) and through which the capillary (13) passes, the flexible seal (16) and the rigid part (11) making the tightness of the connection when the rigid part (11) is pressed by the attachment means onto the micro-fluidic component (2), the flexible seal being an element which is moulded onto the rigid part (11) and around the capillary (13).

2. Device of claim 1, **characterised in that** the means for positioning the capillary (13) are composed of a hole which passes through the rigid part (12).

3. Device of any of claims 1 or 2, **characterised in that** the capillary (13) is glued onto the rigid part (11).

4. Device of claims 2 and 3 together, **characterised in that** the glue is positioned between the through hole (12) of the rigid part (11) and the capillary (13) in order to ensure that it is held on position in the rigid part.

5. Device of claims 2 and 3 together, **characterised in that** the rigid part (11) has one face with a channel (18) in it allowing said glue to be inserted.

6. Device of any of claims 1 to 5, **characterised in that** the means for attaching and positioning the rigid part with respect to the micro-fluidic component are screwing means (15, 17).

7. Device of claim 6, **characterised in that** the screwing means comprise screws (15) which are inserted into the micro-fluidic component (2), and are either screwed into nuts (17) or a threaded hole in the micro-fluidic component.

8. Device of claim 6, **characterised in that** as the component (3, 5) is held by a support (4, 6), the screwing means comprise screws which are inserted into the support, and so the screws are either screwed into nuts or a threaded hole in the support.

9. Device of any of the previous claims, **characterised in that** the rigid part (11) is made of plastic or metal.
